# EUROPEAN PATENT SPECIFICATION

(11) **EP 0 908 654 B1**
(45) Date of publication and mention of the grant of the patent: **05.03.2003**
(21) Application number: 98117392.5
(22) Date of filing: 14.09.1998
(51) Int. Cl.: F16K 31/06

(54) **Flow metering solenoid valve**
Durchflussregelndes Magnetventil
Electrovanne pour la régulation de débit

(30) Priority: 07.10.1997 US 946477
(43) Date of publication of application: 14.04.1999
(73) Proprietor: Blain, Roy W., D-74078 Heilbronn (DE)
(72) Inventor: Blain, Roy W., D-74078 Heilbronn (DE)
(74) Representative: Finck, Dieter, Dr.Ing.

(56) References cited:
- EP-A- 0 762 025
- DE-A- 2 942 886
- US-A- 2 893 428

## Description

This invention relates to an electrical solenoid valve for creating a variable restriction to control the rate of flow of pilot oil under pressure.

In hydraulic control systems, it may be required to vary the flow of oil controlling the speed of a mechanical element, for example the speed of a hydraulic elevator. This can be done by employing known solenoid type proportional valves which respond to the signals given by a computer, this having received measurements of the actual speed of the elevator, comparing this speed with the value of a pre-determined target speed and calculating the required adjustment of electrical power to the proportional valve solenoid effecting oil flow to achieve the required correction of elevator speed.

Proportional valves are more complex in their design than standard open-closed type solenoid valves and far more expensive.

U.S. 2 893 428 discloses a pressure-balanced control valve comprising a valve body having a valve chamber with a plurality of internal annular lands defining axially separated ports. A tubular valve spool is disposed for axial reciprocation in the valve chamber on said lands to control the flow through the ports and having opposing end faces of equal effective area. The valve spool has a port extending through its tubular wall intermediate its ends. One of the chamber ports is a fluid delivery port and is located at one end of the valve chamber. The spool has the entire area of one of its end faces in constant communication with the fluid delivery port at every axial position of the spool.

The delivery port is in constant communication through the tubular interior of the valve spool with the opposing end face of the spool remote from the delivery port. The other of the valve chamber ports is respectively a pressure supply port and an exhaust port and is located on opposite sides of the valve spool port for selective communication through the spool port and the tubular interior of the valve spool with said delivery port in different positions of the valve spool. The valve spool is axially biased by a spring toward the delivery port. A tubular solenoid armature is axially loosely connected to the end of the spool remote from the supply port and adapted for actuation to displace the spool axially against the biasing spring.

The armature has opposing end faces of equal effective area intercommunicated by the tubular interior of the armature and with the tubular interior of the valve spool. The armature is engaged by the biasing spring adjacent its junction with said spool. A stop is provided in the valve housing against which the armature is biased. An electromagnetic coil in the housing surrounds the armature and is adapted when energized to displace the armature against the biasing spring to shift the axial position of said valve spool relative to said ports.

The pressure supply port is located between the exhaust port and the delivery port so that the pressure supply port communicates with the delivery port when the coil is de-energized and so that the exhaust port communicates with the delivery port when the coil is energized.

It is an object,of the invention to employ the major parts of low cost standard open closed type solenoid valves with inexpensive modifications such that the rate of oil flow through the solenoid valve is relative to the electrical power supply to the solenoid coil, as with a proportional valve.

A further object of the invention is to reduce manufacturing and stocking costs of two essential types of flow metering valves by providing the options of having the flow path of the solenoid either "open" or "closed" in their position of rest when no electrical power is applied, employing identical parts in the solenoid assembly, with one minor exception.

A further object of the invention is to achieve interchangeability between a standard open-close two position type solenoid and a variable flow solenoid without the requirement of additional installation space or any other modification to the main hydraulic valve manifold.

According to the invention these objects are achieved by an electrical solenoid valve for creating a variable restriction to control the rate of flow of pilot oil under pressure comprising a tube assembly having a steel housing, a coil within the steel housing, a non magnetic tube surrounded by the steel housing, a magnetizable anchor firmly attached at the upper end of the non magnetic tube and a flange firmly attached at the lower end of the non magnetic tube. Said valve comprises further a valve manifold into which the tube assembly is fixed by the flange, a needle guide clamped in place by the valve manifold, and a movable core assembly resting upon the needle guide and having a cylindrical magnetizable core, a flow metering needle fixedly carried below the core, a metering spring above the core for pressing the core downward to the needle guide and causing a gap between an upper face of the core and a lower face of the anchor. Said valve includes also an axial center bore passing axially through the center of the needle, an orifice bored radially through the needle, and a metering lip on the internal diameter of the needle guide forming with the orifice a variable restriction. The moveable core assembly is in a hydraulically balanced state in that both ends of the needle are subject to a pilot oil pressure of the same magnitude by means of the axial center bore. The pilot oil being metered flows through the orifice into the axial center bore and exits the orifice through the variable restriction. The needle with its orifice is axially movable through the needle guide to positions directly influenced by the electrical power applied to the coil as the subsequent attracting magnetic force between the core and the anchor balances the resistance of the metering spring to provide a required, rate of flow of the pilot oil in a given direction from a higher to a lower source of the pilot oil pressure through the variable restriction.

As one alternative, the radially bored needle orifice may be located just below an upper metering lip of the needle guide, so that the valve is in an open position when the coil is de-energized and closes proportionally to the increasing strength of the electrical power applied to the coil.

In another alternative, the radially bored needle orifice may be located just below a lower metering lip of a flow control seat, so that the valve is in a closed position when the coil is de-energized and opens proportionally to the increasing strength of the electrical power applied to the coil.

It is possible that the flow of pilot oil is in a reverse direction to the given direction and enters the orifice over the upper metering lip or the lower metering lip and exits through the center bore of the needle.

Further, a trimming screw can be built into the anchor to adjust the force of the metering spring acting against the magnetizable core to match an available electrical power range metering the rate of oil flow.

It is convenient that the valve is interchangeable with a standard two position open-closed type solenoid without any change to the main valve manifold without requiring additional space external to the manifold.

The drawings show a valve embodying this invention.

Fig. 1 illustrates the variable flow solenoid valve of the present invention, of the "open when de-energized" type.

Fig. 2 illustrates the variable flow solenoid valve of the present invention, of the "closed when de-energized" type.

The coil housing 11 and electrical coil 12 are standard to the industry. The solenoid casing 13 consists of a non-magnet tube 14 welded together with a magnetisable soft steel anchor 15 at the upper end and a threaded flange 16 at the lower end. A soft steel core 17 fitting loosely within the tube assembly, carries a firmly attached flow metering needle 18 with an axial center bore 19 and a radial orifice 20 or 21 connecting a higher pressure source passage 30 with a lower pressure source passage 31. The radial orifice may be situated either at the upper end of the flow metering needle where it is "open" to flow in relation to the upper metering lip 23 as in (Fig. 3a) when the coil is de-energized or it may be at the lower end of the flow metering needle where it is "closed" to flow in relation to the lower metering lip 24 as in (Fig. 3b) when the coil is de-energized.

The flow metering needle fits closely but freely moveable in the needle guide 22 which is clamped into a recess in the main valve manifold 1 by the solenoid casing. Between metering lips 23 and 24 of the needle guide is a cavity 25 from which leads a radial bore 26 connecting the cavity to a lower pressure source through passage 31.

The direction of oil flow through the solenoid can be from passage 30 to passage 31 as described or in the reverse direction, depending to which passages the higher and lower pressure sources are attached.

In rest position, the core 17 is pressed downwards against the needle guide 22 by the metering spring 27 creating a gap between the core and the anchor.

A trimming screw 28 is built into the cylindrical anchor 15 increase or reduce the force of the metering spring 27 acting against the magnetisable core 17 to match the available electrical power range metering the rate of oil flow.

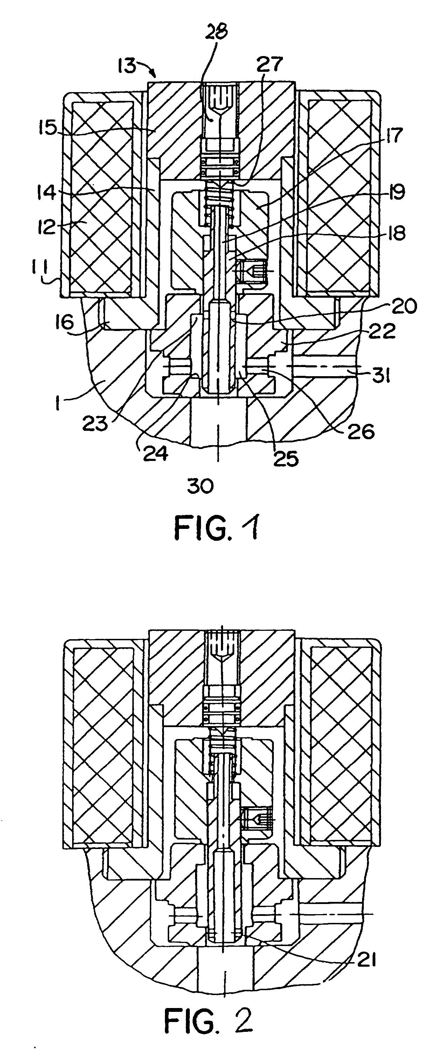

Fig. 1 illustrates the solenoid arrangement with the needle radial orifice 20 below the "upper" metering lip 23 of the guide assembly and therefore "open" to flow through spring pressure when the coil is de-energized.

Increasing the electrical power applied to the coil moves the coil with needle towards the anchor against the force of the spring, proportionally "reducing" the size of the opening of the orifice 20 relative to the metering lip 23 thereby "decreasing" the rate of flow of pilot oil from a higher to a lower pressure source.

Fig. 2 illustrates the alternative solenoid arrangement with the needle radial orifice 21 below the "lower" metering lip 24 of the guide assembly and therefore "closed" to flow through spring pressure when the coil is de-energized.

Increasing the electrical power applied to the coil moves the core with needle towards the anchor against the resistance of the spring proportionally "increasing" the size of the opening of the orifice 21 relative to the metering lip 24 thereby "increasing" the rate of flow of pilot oil from the higher to the lower pressure source.

## Claims

1. An electrical solenoid valve for creating a variable restriction to control the rate of flow of pilot oil under pressure comprising
- a tube assembly having
-- a steel housing (11),
-- a coil (12) within the steel housing (11),
-- a non magnetic tube (14) surrounded by the steel housing (11),
-- a magnetizable anchor (15) firmly attached at the upper end of the non magnetic tube (14) and
-- a threaded flange (16) firmly attached at the lower end of the non magnetic tube (14);
- a valve manifold (1) into which the tube assembly is screwed by the threaded flange (16),
- a needle guide (22) clamped in place by the valve manifold (1),
- a movable core assembly resting upon the needle guide (22) having
-- a cylindrical magnetizable core (17),
-- a flow metering needle (18) fixedly carried below the core (17),
-- a metering spring (27) above the core (17) for pressing the core (17) downward to the needle guide (22) and causing a gap between an upper face of the core (17) and a lower face of the anchor (15);
- an axial center bore (19) passing axially through the center of the needle (18),
- an orifice (20, 21) bored radially through the needle (18), and
- a metering lip (23, 24) on the internal diameter of the needle guide (22) forming a variable restriction with the orifice (20, 21),
- wherein the moveable core assembly is in a hydraulically balanced state in that both ends of the needle (18) are subject to a pilot oil pressure of the same magnitude by means of the axial center bore (19),
- whilst the pilot oil being metered flows through the orifice (20, 21) into the axial center bore (19) and exits the orifice (20, 21) through the variable restriction, and
- wherein the needle (18) with its orifice (20, 21) is axially movable through the needle guide (22) to positions directly influenced by the electrical power applied to the coil (12) as the subsequent attracting magnetic force between the core (17) and the anchor (15) balances the resistance of the metering spring (27) to provide a required rate of flow of the pilot oil in a given direction from a higher to a lower source of the pilot oil pressure through the variable restriction.

2. A valve according to claim 1, wherein the radially bored needle orifice (20) is located just below an upper metering lip (23) of the needle guide (22), so that the valve is in an open position when the coil (12) is de-energized and closes proportionally to the increasing strength of the electrical power applied to the coil (12).

3. A valve defined in claim 1, wherein the radially bored needle orifice (21) is located just below a lower metering lip (24) of the needle guide (22), so that the valve is in a closed position when the coil (12) is de-energized and opens proportionally to the increasing strength of the electrical power applied to the coil (12).

4. A valve according to one of the preceding claims, wherein flow of pilot oil is in a reverse direction to the given direction, entering the orifice (20) over the upper metering lip (23) or entering the orifice (21) over the lower metering lip (24) and exiting through the center bore (19) of the needle (18).

5. A valve according to one of the preceding claims, wherein a trimming screw (28) is built into the anchor (15) to adjust the force of the metering spring (27) acting against the magnetizable core (17) to match an available electrical power range metering the rate of oil flow.

6. A valve according to one of the preceding claims, wherein the valve is interchange able with a standard two position open-dosed type solenoid without any change to the main valve manifold without requiring additional space external to the manifold.

## Patentansprüche

1. Elektrisches Solenoidventil zur Erzeugung einer variablen Verengung zur Steuerung des Durchsatzes von unter Druck stehendem Steueröl
- mit einer Rohranordnung, die
-- ein Stahlgehäuse (11),
-- eine Spule (12) in dem Stahlgehäuse (11),
-- ein nicht magnetisches Rohr (14), welches von dem Stahlgehäuse (11) umgeben ist,
-- einen magnetisierbaren Anker (15), der fest an dem oberen Ende des nicht magnetischen Rohrs (14) befestigt ist, und
-- einen mit Gewinde versehenen Flansch (16) aufweist, der fest an dem unteren Ende des nicht magnetischen Rohrs (14) befestigt ist,
- mit einem Ventilverteiler (1), in den die Rohranordnung durch den mit Gewinde versehenen Flansch (16) geschraubt ist,
- mit einer Nadelführung (22), die durch den Ventilverteiler (1) in Position festgeklemmt ist,
- mit einer beweglichen Kernanordnung, die auf der Nadelführung (22) liegt,
-- einen zylindrischen magnetisierbaren Kern (17),
-- eine Durchflussdosiernadel (18), die fest unter dem Kern (17) gehalten ist, und
-- eine Dosierfeder (27) über dem Kern (17) aufweist, um den Kern (17) nach unten zur Nadelführung (22) zu drücken und einen Spalt zwischen einer oberen Fläche des Kerns (17) und einer unteren Fläche des Ankers (15) herbeizuführen,
- mit einer axialen Mittelbohrung (19), die axial durch die Mitte der Nadel (18) hindurchgeht,
- mit einer radial durch die Nadel (18) gebohrten Öffnung (20, 21), und
- mit einer Dosierlippe (23, 24) am Innendurchmesser der Nadelführung (22), die eine variable Verengung mit der Öffnung (20, 21) bildet,
- wobei die bewegliche Kernanordnung einen sich in einem hydraulischen Gleichgewicht befindlichen Zustand dadurch einnimmt, dass beide Enden der Nadel (18) einem Steueröldruck der gleichen Größe wie die axiale Mittelbohrung (19) ausgesetzt sind,
- während das der Dosierung unterworfene Steueröl durch die Öffnung (20, 21) in die axiale Mittelbohrung (19) strömt und aus der Öffnung (20, 21) durch die variable Verengung austritt, und
- wobei die Nadel (18) mit ihrer Öffnung (20, 21) durch die Nadelführung (22) axial in Positionen bewegbar ist, die direkt von der an die Spule (12) angelegten elektrischen Leistung beeinflusst werden, wenn die daraus folgende magnetische Anzugskraft zwischen dem Kern (17) und dem Anker (15) den Widerstand der Dosierfeder (27) ausgleicht, um einen geforderten Durchsatz an Steueröl in einer vorgegebenen Richtung von einer höheren zu einer niedrigen Quelle des Steueröldrucks durch die variable Verengung herbeizuführen.

2. Ventil nach Anspruch 1, bei welchem die radial gebohrte Nadelöffnung (20) sich genau unter einer oberen Dosierlippe (23) der Nadelführung (22) befindet, so dass das Ventil eine Offenstellung einnimmt, wenn die Spule (12) entregt ist, und proportional zu der zunehmenden Stärke der an die Spule (12) angelegten elektrischen Leistung schließt.

3. Ventil nach Anspruch 1, bei welchem sich die radial gebohrte Nadelöffnung (21) genau unter einer unteren Dosierlippe (27) der Nadelführung (22) befindet, so dass das Ventil eine Schließstellung einnimmt, wenn die Spule (12) entregt ist, und proportional zu der zunehmenden Stärke der an die Spule (12) angelegten elektrischen Leistung öffnet.

4. Ventil nach einem der vorhergehenden Ansprüche, bei welchem der Durchfluss von Steueröl in entgegengesetzter Richtung zu der vorgegebenen Richtung erfolgt, in die Öffnung (20) über die obere Dosierlippe (23) oder in die Öffnung (21) über die untere Dosierlippe (24) eintritt und durch die Mittelbohrung (19) der Nadel (18) austritt.

5. Ventil nach einem der vorhergehenden Ansprüche, bei welchem in dem Anker (15) eine Justierschraube (28) eingebaut ist, um die Kraft der gegen den magnetisierbaren Kern (18) wirkenden Dosierfeder (27) für eine die Menge des Öldurchflusses dosierende Abgleichung eines verfügbaren elektrischen Leistungsbereichs einzustellen.

6. Ventil nach einem der vorhergehenden Ansprüche, bei welchem das Ventil durch ein Solenoid in Standardbauweise mit zwei Stellungen offen-geschlossen ohne irgendeine Veränderung an dem Hauptventilverteiler austauschbar ist, ohne dass zusätzlicher Raum außerhalb des Verteilers erforderlich wird.

## Revendications

1. Électrovanne pour créer une limitation variable permettant de réguler le débit d'huile pilote sous pression, comprenant
-- un ensemble tubulaire ayant
-- un boîtier en acier (11),
-- une bobine (12) à l'intérieur du boîtier en acier (11),
-- un tube amagnétique (14) entouré par le boîtier en acier (11),
-- une pièce d'ancrage magnétisable (15) solidement fixée à l'extrémité supérieure du tube amagnétique (14), et
-- une bride filetée (16) solidement fixée à l'extrémité supérieure du tube amagnétique (14) ;
- une tubulure de vanne (1) dans laquelle l'ensemble tubulaire est vissé par la bride filetée (16),
- un guide de pointeau (22) bloqué en position par la tubulure de vanne (1),
- un ensemble de noyau mobile reposant sur le guide de pointeau (22) ayant
-- un noyau cylindrique magnétisable (17),
-- un pointeau de régulation de débit (18) supporté de manière fixe sous le noyau (17),
-- un ressort de régulation (27) au-dessus du noyau (17) pour appuyer le noyau (17) vers le bas sur le guide de pointeau (22) et former un espace entre une face supérieure du noyau (17) et une face inférieure de la pièce d'ancrage (15);
- un trou central axial (19) traversant axialement le centre du pointeau (18),
- un orifice (20, 21) percé radialement dans le pointeau (18), et
- une lèvre de régulation (23, 24) sur le diamètre interne du guide de pointeau (22) formant une limitation variable avec l'orifice (20, 21),
- dans lequel l'ensemble de noyau mobile est dans un état hydrauliquement équilibré en ce que les deux extrémités du pointeau (18) sont soumises à une pression d'huile pilote de même grandeur au moyen du trou axial central (19),
- tandis que l'huile pilote régulée s'écoule par l'orifice (20, 21) dans le trou axial central (19) et sort de l'orifice (20, 21) par la limitation variable, et
- dans lequel le pointeau (18) avec son orifice (20, 21) peut être amené axialement par le guide de pointeau (22) sur des positions directement influencées par la puissance électrique appliquée à la bobine (12) alors que la force magnétique d'attraction résultante entre le noyau (17) et la pièce d'ancrage (15) équilibre la résistance du ressort de régulation (27) pour fournir un débit exigé de l'huile pilote dans une direction donnée d'une source haute pression à basse pression de l'huile pilote par la limitation variable.

2. Vanne selon la revendication 1, dans laquelle l'orifice de pointeau percé radialement (20) est situé juste au-dessous d'une lèvre de régulation supérieure (23) du guide de pointeau (22), afin que la vanne soit dans une position ouverte lorsque la bobine (12) est désexcitée et se ferme proportionnellement à la force croissante de la puissance électrique appliquée à la bobine (12).

3. Vanne selon la revendication 1, dans laquelle l'orifice de pointeau percé radialement (21) est situé juste au-dessous d'une lèvre de régulation inférieure (24) du guide de pointeau (22), afin que la vanne soit dans une position fermée lorsque la bobine (12) est désexcitée et s'ouvre proportionnellement à la force croissante de la puissance électrique appliquée à la bobine (12).

4. Vanne selon l'une quelconque des revendications précédentes, dans laquelle l'huile pilote s'écoule dans une direction inverse à la direction donnée, entre dans l'orifice (20) au-dessus de la lèvre de régulation supérieure (23) ou entre dans l'orifice (21) au-dessus de la lèvre de régulation inférieure (24) et sort par le trou central (19) du pointeau (18).

5. Vanne selon l'une quelconque des revendications précédentes, dans laquelle une vis d'ajustage (28) est incorporée dans la pièce d'ancrage (15) pour ajuster la force du ressort de régulation (27) agissant sur le noyau magnétisable (17) pour adapter une plage de puissance électrique disponible régulant le débit d'huile.

6. Vanne selon l'une quelconque des revendications précédentes, dans laquelle la vanne est interchangeable avec une électrovanne du type à deux positions ouverte-fermée ne nécessitant aucune modification de la tubulure de vanne principale et aucun espace supplémentaire à l'extérieur de la tubulure.
